# FASCICULE DE BREVET EUROPEEN

(11) **EP 2 820 109 B1**
(45) Date de publication et mention de la délivrance du brevet: **23.10.2019**
(21) Numéro de dépôt: 13708739.1
(22) Date de dépôt: 28.02.2013
(51) Int. Cl.: C09K 21/00, F17C 1/12

(54) **RÉSERVOIR DE STOCKAGE HAUTE PRESSION REVÊTU D'UN MATÉRIAU DE PROTECTION AU FEU, LEURS PROCÉDÉS DE PRÉPARATION ET LEURS UTILISATIONS**
MIT EINEM FEUERSCHUTZMATERIAL BESCHICHTETER HOCHDRUCKSPEICHERBEHÄLTER, VERFAHREN ZUR HERSTELLUNG DAVON UND VERWENDUNGEN DAVON
HIGH-PRESSURE STORAGE TANK COATED WITH FIRE PROTECTION MATERIAL, METHODS FOR PREPARING SAME, AND USES THEREOF

(30) Priorité: 28.02.2012 FR 1251797
(43) Date de publication de la demande: 07.01.2015
(73) Titulaire: Commissariat à l'Énergie Atomique et aux Énergies Alternatives, 75015 Paris (FR)
(72) Inventeur: VILLALONGA, Stéphane, 37000 Tours (FR); NONY, Fabien, 37260 Monts (FR); YVERNES, Jean-Luc, 37250 Veigne (FR); GARONNE, François, 37700 Saint Pierre des Corps (FR)
(74) Mandataire: Brevalex
(86) Numéro de dépôt international: PCT/EP2013/054000
(87) Numéro de publication internationale: WO 2013/127902

(56) Documents cités:
- WO-A1-97/17570
- AT-U1- 1 849
- DATABASE WPI Week 201148 Thomson Scientific, London, GB; AN 2011-G44269 XP002686353, & CN 102 040 841 A (DONGGUAN PUCA PLASTIC TECHNOLOGY CO LTD) 4 mai 2011 (2011-05-04)

## Description

### DOMAINE TECHNIQUE

La présente invention concerne le domaine technique des réservoirs de stockage haute pression et, plus particulièrement, le domaine de la protection au feu de tels réservoirs.

En effet, la présente description divulgue un matériau permettant de protéger contre le feu un réservoir de stockage haute pression, ledit matériau étant une matrice en résine élastomère thermodurcissable comprenant des charges endothermiques.

La présente invention concerne un réservoir de stockage haute pression revêtu par un tel matériau, un procédé pour préparer ce matériau ou ce réservoir revêtu et leurs utilisations.

### ÉTAT DE LA TECHNIQUE ANTÉRIEURE

Malgré le fait que les retardateurs de flamme n'offrent pas une protection absolue contre le feu, ceux-ci ont joué et continuent de jouer un rôle important dans la réduction de l'apparition et de l'intensité des feux.

Les retardateurs de flamme représentent une importante famille dans le commerce des additifs pour plastique et pour le traitement des textiles, avec plus de 4 billions de dollars de vente estimés pour 2008. Les retardateurs de flammes représentent la famille d'additifs pour plastique la plus grandissante à travers le monde (d'Amico, E., Chem. Week (2008) (Oct. 13/20), p23).

De nos jours, il existe de nombreux produits retardateurs de flamme tels que des charges ignifugeantes, des systèmes intumescents ou des matériaux inertes, de nombreux fournisseurs (par exemple plus d'une centaine est référencée dans le livre « Flame Retardants for plastics and textiles - Practical applications » de Edward D. Weil), ainsi que de nombreuses applications.

Cependant, il n'existe que peu de travaux réalisés pour les réservoirs de stockage haute pression soumis à plusieurs centaines de bars. L'état de la technique présente peu de moyens et de procédés mis en œuvre pour protéger du feu et des incendies de tels réservoirs.

La demande internationale WO 99/03792 intitulée « Methods of making high-temperature glass fiber and thermal protective structures » et publiée le 28 janvier 1999 s'intéresse toutefois à la protection du feu de réservoirs de stockage. L'invention qui y est décrite concerne une fibre de verre capable de résister à des températures supérieures à 1900°F (i.e. 1038°C), produite par traitement d'une fibre de verre avec des acides puis avec un matériau organométallique. Les autres matériaux résistants au feu sont basés sur le principe de collage ou d'incorporation dans une surface de substrat d'un tissu pré-induit d'un matériau actif (intumescent ou sublimant). US4405425 décrit la production d'un matériaux par extrusion d'un élastomère en silicone résistant au feu.

La demande internationale WO 97/17570 propose un réservoir de stockage dont la structure comprend une vessie intérieure et une enveloppe en résine renforcée par des fibres, ladite résine pouvant être une résine en silicone. Il est envisagé que le réservoir soit à l'épreuve du feu par un choix approprié des matériaux le constituant ou par l'utilisation d'additifs appropriés.

Le modèle d'utilité AT 001849 décrit un réservoir pour gaz sous pression revêtu au moins partiellement par une couche protectrice à base de polyuréthane non poreux pouvant contenir des retardateurs de flamme.

Il existe donc un réel besoin pour un matériau et des procédés permettant de protéger du feu les réservoirs de stockage haute pression, qui soient faciles de mise en œuvre et qui tiennent compte des contraintes liées à ce type de réservoirs telles que leur stockage et les cycles de remplissage/vidange.

### EXPOSÉ DE L'INVENTION

Les inventeurs ont résolu le problème technique exposé ci-dessus par la formulation d'un matériau de protection au feu et sa mise en œuvre pour la protection au feu des réservoirs de stockage haute pression ainsi qu'une contribution à la protection contre les chocs et une meilleure intégration dans un système de stockage.

Plus particulièrement, la présente description divulgue un matériau résistant au feu comprenant une matrice en résine élastomère thermodurcissable dans laquelle sont incorporées des charges endothermiques. Avantageusement, le matériau résistant au feu est uniquement constitué par une matrice en résine élastomère thermodurcissable dans laquelle sont incorporées des charges endothermiques.

Par ce matériau, la présente invention permet non seulement d'apporter une protection thermique au réservoir de stockage haute pression sur lequel le matériau est disposé, mais aussi d'apporter une protection additionnelle contre les chocs et de proposer une grande liberté de forme externe pouvant être utilisée pour optimiser l'intégration du bloc (réservoir et protection) dans le sujet de stockage. Ainsi, la formulation du matériau mis en œuvre dans l'invention permet à ce dernier d'avoir une triple fonction, une fonction principale de protection thermique, et deux fonctions complémentaires et implicites de protection contre les chocs et de conformabilité pour avoir la meilleure intégration possible du réservoir dans un système de stockage.

Par « matrice en résine élastomère thermodurcissable », on entend la partie de base du matériau mis en œuvre dans l'invention qui donne la forme à ce dernier.

La notion de « résine élastomère thermodurcissable » fait référence à une propriété de la résine/polymère qui est déformable de manière réversible et qui ne subit pas de dommages tels que fractures, déformations non élastiques ou ruptures, lorsqu'elle est déformée et qui, lorsqu'elle est réticulée, aboutit à un matériau insoluble et infusible.

Dans le cadre de la présente invention, la matrice en résine élastomère thermodurcissable mise en œuvre est une résine silicone.

Avantageusement, la matrice en résine élastomère thermodurcissable mise en œuvre dans l'invention présente une épaisseur comprise entre 100 µm et 10 cm, notamment entre 500 µm et 5 cm et, en particulier, entre 900 µm et 2 cm.

Les avantages du matériau mis en œuvre dans l'invention qui sont la conséquence de la mise en œuvre d'une matrice en résine silicone sont nombreux. A titre d'exemples de tels avantages, on peut citer :
- un fort taux de charge permettant d'incorporer une quantité contrôlable et ajustable de charges endothermiques ;
- une épaisseur de protection et une forme externe modulables permettant de choisir la durée de résistance du matériau et les capacités du réservoir à être manipulé et intégré à des systèmes de stockage ;
- une structure monobloc ne nécessitant ni assemblage, ni joint ;
- une mise en œuvre simple qui permet d'avoir facilement tout type de géométries conformables et des cadences industrielles grâce au coulage dans un moule ou l'injection haute pression dans un moule de la formulation selon l'invention ;
- une résistance aux cycles de fatigue des réservoirs de stockage haute pression grâce à sa souplesse ;
- une facilité pour être réparé, retiré, découpé, recollé, replacé ou remplacé.

De plus, une résine en silicone présente l'avantage d'être incombustible. Ainsi, sous l'effet de la chaleur, cette résine se dégrade et se transforme en verre mais ne brûle pas.

Dans le matériau mis en œuvre dans la présente invention, des charges endothermiques sont incorporées, introduites, dispersées, enrobées et/ou encapsulées dans la matrice en résine élastomère thermodurcissable telle que précédemment définie.

Une charge endothermique est un composé qui, sous l'effet de la chaleur, réagit chimiquement en produisant, le plus souvent, de l'eau et refroidissant ainsi la structure. Les produits volatiles de cette réaction chimique permettent également de ralentir la combustion en diminuant la quantité de mélanges inflammables. Une telle charge est également connue sous l'appellation « retardateur de flamme ».

Toute charge endothermique connue de l'homme du métier est utilisable dans le cadre de la présente invention. Toutefois, l'homme du métier préférera, lors de la mise en œuvre de la présente invention, éviter les retardateurs de flamme émettant des fumées toxiques.

Les charges endothermiques mises en œuvre dans le cadre de la présente invention peuvent, plus particulièrement, être choisies parmi le trihydroxyde d'aluminium (ATH), le tétraborate disodique décahydraté (ou borax), le phosphate trisodique dodécahydraté, le dihydroxyde de magnésium (ou Brucite), la Colemanite, un monophosphate de mélamine, un pyrophosphate de mélamine, un polyphosphate de mélamine, le borate de zinc, l'hydromagnésite, un tripolyphosphate (TPP), le bis(diphenyl phosphate) de résorcinol (RDP), le bis(diphenyl phosphate) de bisphénol-A (BPADP) et leurs mélanges.

Plus particulièrement encore, les charges endothermiques mises en œuvre dans le cadre de la présente invention sont du trihydroxyde d'aluminium (ATH).

La quantité de charges endothermiques sera définie par l'utilisateur en fonction, sachant que l'utilisation d'une matrice en résine élastomère thermodurcissable permet d'utiliser de faibles comme d'importantes quantités de charges endothermiques. Avantageusement, la quantité de charges endothermiques exprimées en poids par rapport au poids total du matériau en résine élastomère thermodurcissable est compris entre 10% et 90%, notamment entre 15% et 80% et, en particulier, entre 40% et 70%.

La présente invention concerne un procédé de préparation d'un matériau résistant au feu pour réservoir de stockage haute pression. Ce procédé tel que défini dans les revendications 1 à 3 comprend les étapes suivantes consistant à :
a) préparer un mélange comprenant au moins un précurseur de la résine élastomère thermodurcissable (i.e. un précurseur de la résine silicone) et au moins une charge endothermique ;
b) éventuellement dégazer le mélange obtenu à l'étape (a) ;
c) ajouter, au mélange obtenu à l'étape (a) ou au mélange dégazé obtenu à l'étape (b), un agent permettant d'obtenir à partir dudit précurseur ladite résine élastomère thermodurcissable ;
d) éventuellement dégazer le mélange obtenu à l'étape (c) ;
e) mettre en forme le mélange obtenu à l'étape (c) ou le mélange dégazé obtenu à l'étape (d), moyennant quoi un matériau selon la présente invention est obtenu.

Lors de l'étape (a) du procédé selon la présente invention, l'homme du métier saura déterminer quel(s) précurseur(s) mettre en œuvre en fonction de la résine élastomère thermodurcissable recherchée, du (ou des) charge(s) utilisée(s), du taux de charge et du procédé de mise en forme envisagé tel que, à titre d'exemples non limitatifs, coulage, injection et transfert assisté par le vide. Un tel précurseur peut être un monomère, un mélange de monomères différents, un oligomère, un mélange d'oligomères différents, un prépolymère, un mélange de prépolymères différents, un polymère non réticulé, un mélange de polymères non réticulés différents ou un de leurs mélanges.

De plus, dans le mélange tel que préparé à l'étape (a) du procédé selon l'invention, la (ou les) charge(s) endothermique(s) sont avantageusement ajoutée(s) au(x) précurseur(s) de la résine élastomère thermodurcissable. Plus particulièrement, elles sont incorporées progressivement de manière à obtenir une dispersion la plus homogène possible.

Le (ou les) précurseur(s) de la résine élastomère thermodurcissable est(sont) avantageusement utilisé(s), lors de l'étape (a) du procédé selon l'invention, sous forme liquide. Lorsque plusieurs précurseurs de la résine élastomère thermodurcissable différents sont utilisés, ils peuvent être mélangés en une fois ou être ajoutés les uns après les autres ou par groupe, de façon à former un 1^{er} mélange dans lequel la (ou les) charge(s) endothermique(s) sont ajoutée(s).

De même, la (ou les) charge(s) endothermique(s) peu(ven)t être utilisée(s), lors de l'étape (a) du procédé selon l'invention, sous forme solide ou sous forme liquide.

Le mélange lors de l'étape (a) est effectué sous agitation en utilisant un mélangeur, et à température ambiante (i.e. 23°C ± 5°C).

Le mélange obtenu suite à l'étape (a) peut se présenter sous forme liquide ou sous forme pâteuse. Avantageusement, le mélange obtenu suite à l'étape (a) est un mélange liquide.

Le dégazage optionnel lors de l'étape (b) permet d'éliminer, si nécessaire, l'air introduit, lors de l'étape (a), dans le mélange liquide.

Toute technique connue de l'homme du métier pour dégazer une solution peut être utilisée lors de l'étape (b) du procédé selon la présente invention. Avantageusement, le dégazage lors de l'étape (b) du procédé selon la présente invention est choisi parmi un dégazage sous vide notamment en plaçant le mélange de l'étape (a) sous pression réduite, en l'agitant sous pression réduite et/ou en le soniquant sous pression réduite ; un dégazage par ultrasonication du mélange de l'étape (a). Plus particulièrement, le dégazage lors de l'étape (b) du procédé selon la présente invention est un dégazage sous vide.

Tout ce qui a été précédemment indiqué pour le dégazage de l'étape (b) du procédé selon l'invention s'applique *mutatis mutandis* au dégazage de l'étape (d) de ce même procédé.

Lors de l'étape (c) du procédé selon la présente invention, l'homme du métier saura déterminer quel(s) agent(s) mettre en œuvre en fonction de la résine élastomère thermodurcissable recherchée et du (ou des) précurseur(s) utilisé(s) lors de l'étape (a). Un tel agent peut être un catalyseur de polymérisation, un activateur de polymérisation, un agent réticulant, ou un de leurs mélanges.

Le (ou les) agent(s) mis en œuvre lors de l'étape (c) du procédé selon la présente invention peu(ven)t être utilisé(s), sous forme liquide ou en solution dans un solvant adapté. Lorsque plusieurs agents différents sont utilisés, ils peuvent être mélangés ensemble avant d'être ajoutés au mélange obtenu à l'étape (a) ou à l'étape (b) ou être ajoutés les uns après les autres ou par groupe au mélange obtenu à l'étape (a) ou à l'étape (b).

Le mélange lors de l'étape (c) est effectué sous agitation en utilisant un mélangeur ou un homogénéisateur, et à température ambiante.

Le mélange obtenu suite à l'étape (c) ou suite à l'étape (d) est appelé dans la présente « formulation » et se distingue du matériau mis en œuvre dans la présente invention de par le fait qu'elle n'est pas mise en forme.

L'étape (e) du procédé selon la présente invention correspond à cette mise en forme. Cette dernière est avantageusement mise en œuvre par coulage dans un moule du mélange obtenu à l'étape (c) ou du mélange dégazé obtenu à l'étape (d) ou l'injection sous pression dans un moule du mélange obtenu à l'étape (c) ou du mélange dégazé obtenu à l'étape (d) ou le transfert assisté par le vide dans un moule du mélange obtenu à l'étape (c) ou du mélange dégazé obtenu à l'étape (d). Les moules mis en œuvre peuvent permettre que tout le réservoir soit recouvert de la formulation en une étape (moule complet) ou que seule la moitié du réservoir en soit recouverte, nécessitant la répétition de l'étape (e) pour que l'autre moitié du réservoir soit recouverte. Malgré la répétition de l'étape (e), cette variante offre l'avantage d'un démoulage facilité.

Ces techniques de coulage ou d'injection sous haute pression ou de transfert assisté par le vide sont des techniques connues de l'homme du métier. L'étape (e) du procédé permet de conférer au matériau mis en œuvre dans l'invention la forme externe désirée. Cette dernière est entièrement modulable par exemple un revêtement d'épaisseur sensiblement identique et épousant la forme externe du réservoir à protéger ou, de protéger localement des zones sensibles par des épaisseurs plus importantes ou, de façon alternative, un parallélépipède adapté pour emboîter des réservoirs protégés les uns contre les autres et avantageusement combler les espace libres par la formulation conférant de fait une résistance accrue au feu, aux chocs et aux vibrations.

De plus, les techniques de coulage ou d'injection sous haute pression ou de transfert assisté par le vide sont des techniques à froid (voie liquide) sans chauffage qui permettent au matériau mis en œuvre dans l'invention d'être utilisé sous forme de revêtement ou coating additionnel notamment d'un réservoir et, en particulier, d'un réservoir de stockage haute pression.

La présente description divulgue l'utilisation d'un matériau mis en œuvre dans la présente invention ou susceptible d'être préparé selon un procédé selon l'invention pour protéger un réservoir de stockage haute pression du feu.

Par « réservoir de stockage haute pression », on entend, dans le cadre de la présente invention, un réservoir contenant un fluide sous pression et, en particulier, un gaz sous pression. Un tel réservoir est un réservoir composite de type IV.

Par « haute pression », on entend un fluide et notamment un gaz à une pression supérieure à la pression atmosphérique, notamment supérieure à 100 bars, avantageusement supérieure ou égale à 200 bars et, en particulier comprise entre 200 et 2000 bars. Le gaz stocké dans le réservoir selon l'invention est notamment du gaz naturel, de l'air comprimé, un gaz neutre ou inerte, de l'azote, de l'argon, de l'hydrogène gazeux, de l'hélium, de l'oxygène ou un de leurs mélanges.

Par « protéger du feu » ou « protéger au feu », on entend que le matériau mis en œuvre dans la présente invention permet de protéger le réservoir de stockage haute pression lors d'un incendie afin de retarder voire d'éviter leur éclatement.

La présente invention concerne en outre un réservoir de stockage haute pression dont seule une partie de la surface externe est recouverte d'un matériau résistant au feu tel que précédemment défini ou susceptible d'être préparé selon un procédé tel que précédemment défini. Ce réservoir de stockage est tel que défini dans les revendications 4 à 7.

Dans une 1^{ère} forme de mise en œuvre ne faisant pas partie de l'invention, toute la surface externe du réservoir de stockage haute pression est recouverte ou revêtue par un matériau mis en œuvre dans l'invention. Par « matériau mis en œuvre dans l'invention », on entend aussi bien un matériau résistant au feu tel que précédemment défini qu'un matériau susceptible d'être préparé selon un procédé tel que précédemment défini.

Dans une 2^{nde} forme de mise en œuvre faisant partie de l'invention, seule une partie de la surface externe du réservoir de stockage haute pression est recouverte ou revêtue par un matériau mis en œuvre dans l'invention.

Dans cette 2^{nde} forme de mise en œuvre, la (ou les) zone(s) non recouverte(s) par le matériau mis en œuvre dans l'invention sont soit laissée(s) en l'état i.e. non revêtue(s), soit revêtue(s) par un matériau, différent du matériau mis en œuvre dans l'invention, qui est un matériau fusible. Ainsi, dans le cadre de la présente invention, une partie de la surface externe du réservoir de stockage haute pression est recouverte d'un matériau fusible.

Par « matériau fusible », on entend, un matériau, également connu sous l'appellation « matériau thermofusible », qui est susceptible de se liquéfier i.e. de fondre sous l'action de la chaleur et/ou dont le point de fusion est relativement bas. Un tel matériau est donc incapable de protéger la paroi du réservoir de stockage haute pression de la chaleur. L'homme du métier connait différents matériaux fusibles utilisables dans le cadre de la présente invention. A titre d'exemples particuliers de tels matériaux fusibles, on peut citer des matériaux thermoplastiques et des alliages ou composés métalliques à bas point de fusion. En particulier, les matériaux fusibles seront choisis parmi les matériaux thermoplastiques à bas point de fusion tels que les polyoléfines et, plus particulièrement, le polyéthylène.

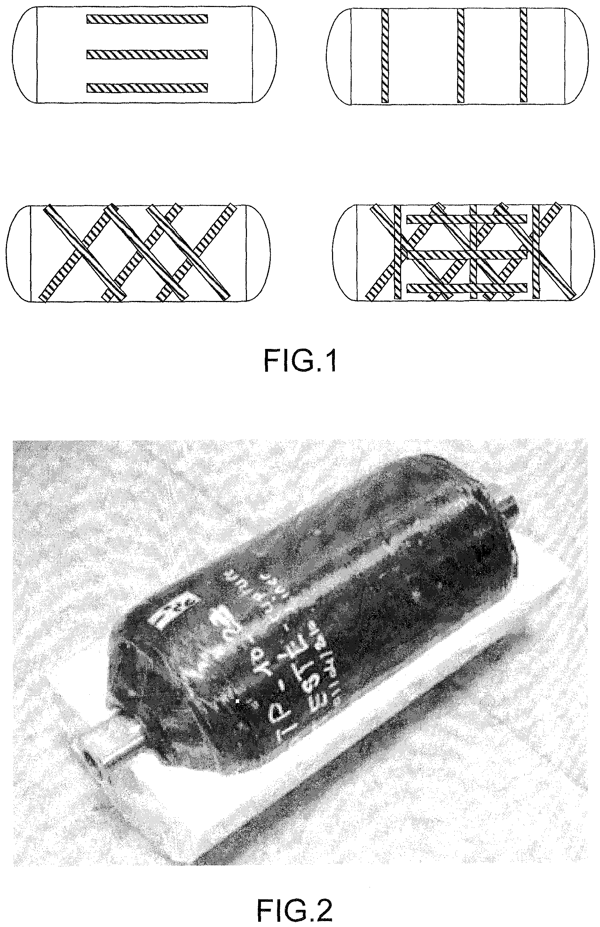

A la surface du réservoir de stockage haute pression, la (ou les) zone(s) de matériau fusible peu(ven)t être disposée(s) de façon aléatoire ou ordonnée, sous forme de bandes parallèles ou s'entrecroisant, dans l'axe ou dans la circonférence du réservoir. La Figure 1 présente différentes possibilités quant à la disposition du matériau fusible à la surface d'un réservoir selon l'invention.

Cette 2^{nde} forme de mise en œuvre offre l'avantage, notamment dans le cas de réservoirs de stockage dont la structure est en un (ou plusieurs) matériau(x) fusible(s), d'accroître l'effet protecteur du matériau mis en œuvre dans l'invention en évitant ou en retardant encore l'éclatement du réservoir. En effet, en cas d'incendie, les zones au niveau desquelles le revêtement (ou coating) n'est pas protecteur (i.e. zones sans revêtement ou avec un revêtement de matériau fusible) et les plus exposées à la chaleur fondent ou se dégradent rapidement. Ainsi, la paroi du réservoir peut être localement attaquée par l'incendie, permettant de la dégrader et/ou de la faire fondre localement et, en conséquence de quoi, le réservoir peut fuir au plus vite par ces zones en minimisant les risques d'explosion mécanique. Le reste du revêtement en matériau mis en œuvre dans l'invention est protecteur et permet de retarder la montée en pression du réservoir.

Que le matériau mis en œuvre dans l'invention recouvre partie de la surface du réservoir de stockage haute pression et que cette surface présente en outre des zones de revêtement par un matériau fusible, le réservoir peut encore être recouvert d'une (ou plusieurs) protection(s) supplémentaire(s), cette(ces) dernière(s) étant disposée(s) au dessus de tout ou partie du matériau mis en œuvre dans l'invention et/ou de tout ou partie du matériau fusible.

Ainsi, tout ou partie de la surface externe du réservoir selon la présente invention (i.e. revêtu du matériau résistant au feu mis en œuvre dans l'invention et éventuellement de matériau fusible) est en outre recouverte d'un produit intumescent tel qu'une peinture ou un vernis intumescent(e). Un produit intumescent gonfle à la chaleur et ce, pour des températures supérieures à 200°C. Il permet, par conséquent, de protéger les sous-couches, dont le réservoir, des radiations thermiques. La durée de protection totale dépend également de l'épaisseur déposée et de la puissance thermique reçue par la protection. Il existe une synergie entre l'utilisation et la structuration des charges utilisées i.e. une synergie entre le matériau mis en œuvre dans la présente invention et le produit intumescent. Par « produit intumescent », on entend, dans le cadre de la présente invention, un vernis, une peinture ou un enduit intumescent(e).

Généralement, un système intumescent se compose de trois ingrédients qui sont (1) une source d'acide qui favorise la déshydratation de l'agent de charbonnement ; (2) un agent de charbonnement, généralement une macromolécule possédant des groupements hydroxyles et (3) un agent gonflant, qui se décompose et libère un gaz neutre, conduisant à l'expansion du polymère, constituant principal de la peinture ou du vernis et à la formation d'une couche composée de très nombreuses cellules creuses.

Tout produit connu de l'homme du métier est utilisable dans le cadre de la présente invention. A titre d'exemples illustratifs et non limitatifs, on peut citer les produits commercialisés par les sociétés Artech, Chenguang, Clariant, Comus, Dahiachi, Thermal Science Inc., Innovative Fire Systems, Comus®, ITAC ou Lurie.

Dans le cas également d'un réservoir recouvert d'un matériau mis en œuvre dans la présente invention et d'un produit intumescent, au moins une zone de produit intumescent est remplacée par un matériau fusible tel que précédemment défini. Avantageusement, au moins une zone du matériau résistant au feu et au moins zone de produit intumescent sont remplacées par un matériau fusible identique ou par des matériaux fusibles différents. En particulier, au moins une zone du matériau résistant au feu remplacée par un matériau fusible et au moins une zone de produit intumescent remplacée par un matériau fusible sont chevauchantes. Plus particulièrement, toutes les zones du matériau résistant au feu remplacées par un matériau fusible et toutes les zones de produit intumescent remplacées par un matériau fusible sont chevauchantes deux à deux.

La présence d'un matériau fusible conjointement avec un matériau résistant au feu éventuellement revêtu de produit intumescent offre une protection accrue des réservoirs de stockage haute pression. Cette protection accrue des réservoirs permet aux éventuels fusibles thermiques présents sur le système de stockage d'augmenter sensiblement leur fiabilité en offrant une plage de déclenchement plus large pour dépressuriser le réservoir et éviter toute explosion.

En variante, tout ou partie de la surface externe du réservoir selon la présente invention est en outre recouverte d'un matériau inerte au feu et isolant et notamment d'un tissu ou d'une chaussette en matériau inerte au feu et isolant. En effet, un tel matériau est ininflammable, isolant et peut être utilisé sur le matériau mis en œuvre dans la présente invention pour maximiser la protection au feu du réservoir. Il peut également être utilisé sur tout ou partie du réservoir dont au moins une partie est revêtue du matériau mis en œuvre dans la présente invention. La couche de matériau inerte au feu et isolant peut être également recouverte d'une couche de produit intumescent.

A titre de matériau inerte au feu et isolant, on peut citer le basalte, le mica, le verre, le carbone et la silice. Le matériau inerte au feu et isolant mis en œuvre dans le cadre de la présente invention est produit à partir de fibres d'un tel matériau, comme, par exemple, de la laine de silice.

Une 1^{ère} alternative consiste à draper, avec des tissus en matériau inerte au feu et isolant, le réservoir revêtu du matériau mis en œuvre dans l'invention et éventuellement de rajouter, sur le matériau inerte au feu et isolant, un produit intumescent. Les tissus en matériau inerte au feu et isolant sont découpés pour être conformables à la forme du réservoir puis drapés autour du réservoir. Ils peuvent être cousus pour être maintenus autour du réservoir ou maintenus avec des bagues.

Une 2^{nde} alternative consiste à fabriquer une chaussette en matériau inerte au feu et isolant et, une fois fabriquée, à l'enfiler autour du réservoir. L'utilisation d'une chaussette permet de recouvrir entièrement le réservoir et tout en restant à son contact. De plus, elle peut être facilement retirée et/ou échangée.

Tout produit à base de matériau inerte au feu et isolant connu de l'homme du métier est utilisable dans le cadre de la présente invention. A titre d'exemples illustratifs et non limitatifs, on peut citer les produits commercialisés par la société Industries 3R Inc.

Comme le produit intumescent, le matériau inerte au feu et isolant joue un rôle synergique avec le matériau résistant au feu éventuellement combiné avec un matériau fusible dans la protection contre le feu du réservoir de stockage haute pression.

En résumé, un réservoir de stockage selon la présente invention peut être :
- un réservoir de stockage haute pression recouvert, en partie, par un matériau résistant au feu mis en œuvre dans la présente invention et la (ou les) zone(s) non recouverte(s) par le matériau résistant au feu mis en œuvre dans la présente invention est(sont) recouverte(s) par un matériau fusible tel que précédemment défini ;
- un réservoir de stockage haute pression recouvert, en partie, par un matériau résistant au feu mis en œuvre dans la présente invention et la (ou les) zone(s) non recouverte(s) par le matériau résistant au feu mis en œuvre dans la présente invention est(sont) recouverte(s) par un matériau fusible tel que précédemment défini ; le réservoir ainsi revêtu étant recouvert, en totalité ou en partie, par un produit intumescent tel que précédemment défini ;
- un réservoir de stockage haute pression recouvert, en partie, par un matériau résistant au feu mis en œuvre dans la présente invention et la (ou les) zone(s) non recouverte(s) par le matériau résistant au feu mis en œuvre dans la présente invention est(sont) recouverte(s) par un matériau fusible tel que précédemment défini ; le réservoir ainsi revêtu étant recouvert, en totalité ou en partie, par un matériau inerte au feu et isolant tel que précédemment défini ;
- un réservoir de stockage haute pression recouvert, en partie, par un matériau résistant au feu mis en œuvre dans la présente invention et, la (ou les) zone(s) non recouverte(s) par le matériau résistant au feu mis en œuvre dans la présente invention est(sont) recouverte(s) par un matériau fusible tel que précédemment défini ; le réservoir ainsi revêtu étant recouvert, en totalité ou en partie, par un matériau inerte au feu et isolant tel que précédemment défini ; le matériau inerte au feu et isolant étant recouvert, en totalité ou en partie, par un produit intumescent tel que précédemment défini.

La présente invention offre à l'homme du métier une architecture ajustable selon le cahier des charges du réservoir avec l'utilisation du matériau résistant au feu mis en œuvre dans l'invention et d'au moins un autre matériau choisi parmi le produit intumescent, le matériau inerte au feu et isolant et le matériau fusible tels que précédemment définis.

La présente invention concerne également un procédé pour préparer un réservoir de stockage protégé du feu tel que précédemment défini. Ce procédé objet des revendications 8 à 12 peut être mis en œuvre sur un réservoir de stockage haute pression vide ou préalablement rempli par le fluide et notamment le gaz sous pression.

Ainsi, le procédé selon la présente invention comprend une étape consistant à appliquer, sur seule une partie de la surface du réservoir de stockage haute pression, un matériau résistant au feu tel que précédemment défini ou préparé selon un procédé tel que précédemment défini. L'application du matériau résistant au feu correspond avantageusement à l'étape (e) telle que précédemment définie.

Le procédé selon la présente invention peut comprendre en outre une étape additionnelle consistant à appliquer, sur tout ou partie de la surface du réservoir revêtue par le matériau résistant au feu mis en œuvre dans la présente invention, un produit intumescent tel que précédemment défini. Cette application peut être mise en œuvre au moyen d'un pinceau, d'un rouleau, d'une vaporisation ou d'une projection.

Le procédé selon la présente invention peut comprendre une étape additionnelle consistant à remplacer au moins une zone du matériau résistant au feu éventuellement revêtue de produit intumescent par un matériau fusible. Trois variantes différentes peuvent être envisagées pour cette étape additionnelle.

Dans une 1^{ère} variante, suite à l'application du matériau résistant au feu et éventuellement suite à l'application du produit intumescent, le réservoir dont seule une partie de la surface est revêtue d'une couche de matériau résistant au feu et éventuellement d'une couche additionnelle de produit intumescent peut subir un traitement visant à éliminer une (ou plusieurs) zone(s) du matériau résistant au feu éventuellement revêtue(s) de produit intumescent et éventuellement à la (ou les) remplacer par un produit fusible tel que précédemment défini.

Ainsi, suite à l'application du matériau résistant au feu et éventuellement suite à l'application du produit intumescent, au moins une zone du matériau résistant au feu éventuellement revêtue de produit intumescent est éliminée et éventuellement remplacée par un produit fusible. Compte-tenu de la nature du matériau fusible résistant au feu, l'élimination lors de cette étape se fait par simple découpe du matériau éventuellement revêtu de produit intumescent.

L'homme du métier saura choisir la technique d'application du produit fusible en remplacement des zones éliminées. A titre d'exemples illustratifs et non limitatifs, on peut citer une application au pinceau, au rouleau, par vaporisation ou par application d'un tissu enduit d'un matériau fusible tel que précédemment défini.

Dans une 2^{nde} variante, avant l'application du matériau résistant au feu et éventuellement avant l'application du produit intumescent, le réservoir peut subir un traitement préalable visant à occuper une (ou plusieurs) zone(s) de sa surface par un produit fusible tel que précédemment défini.

Compte-tenu de la nature du matériau fusible résistant au feu, l'ajout du matériau fusible lors de cette étape se fait par simple collage ou coulées du matériau fusible. L'homme du métier saura choisir la technique d'application du produit fusible dans les zones sélectionnées. A titre d'exemples illustratifs et non limitatifs, on peut citer une mise en œuvre du matériau fusible par collage d'une ou plusieurs pièces découpées à la forme désirée, par coulée, par injection ou par transfert du matériau fusible dans un moule à la forme désirée.

Une fois le matériau fusible positionné, les zones du réservoir non recouvertes par le matériau fusible sont revêtues d'une couche de matériau résistant au feu et éventuellement d'une couche additionnelle de produit intumescent.

Dans une 3^{ème} variante, avant l'application du matériau résistant au feu et éventuellement avant l'application du produit intumescent, le réservoir peut subir un traitement préalable visant à occuper une (ou plusieurs) zone(s) de sa surface par un produit différent d'un produit fusible. Ce produit joue un rôle de masque et est avantageusement choisi pour ne pas présenter d'affinité avec la surface du réservoir facilitant de fait son élimination ultérieure. A titre d'exemple, un tel masque peut être un morceau ou une bande de tissu.

Une fois le masque positionné, les zones du réservoir non recouvertes par ce masque sont revêtues d'une couche de matériau résistant au feu et éventuellement d'une couche additionnelle de produit intumescent. Puis, le masque est éliminé par arrachage ou décollage, libérant ainsi une zone qui est ensuite remplie de matériau fusible tel que précédemment décrit et selon l'une quelconque des techniques envisagées dans le cadre de la 1^{ère} variante (i.e. découpe du matériau éventuellement revêtu de produit intumescent).

Le procédé selon la présente invention peut également comprendre une étape additionnelle consistant à revêtir le réservoir dont seule une partie de la surface est revêtue d'un matériau résistant au feu et éventuellement d'un matériau fusible par un matériau inerte au feu et isolant tel que précédemment défini. Les techniques quant au revêtement du réservoir par le matériau inerte au feu et isolant dépendront de la forme selon laquelle cette dernière se présente i.e. tissu en matériau inerte au feu et isolant ou chaussette en matériau inerte au feu et isolant ou enroulement filamentaire et sont telles que précédemment définies. Une fois, le matériau inerte au feu et isolant positionné, il peut être revêtu, en totalité ou en partie, par un produit intumescent tel que précédemment défini.

Enfin, dans le procédé selon la présente invention, préalablement à l'application du matériau résistant au feu et éventuellement du matériau fusible sur le réservoir et/ou préalablement à l'application du produit intumescent sur le matériau résistant au feu et éventuellement sur le matériau fusible ou sur le matériau inerte et isolant au feu, le réservoir, le matériau résistant au feu, le matériau fusible et/ou le matériau inerte et isolant au feu peuvent subir un traitement facilitant l'accroche du matériau résistant au feu, du matériau fusible et/ou du produit intumescent par l'ajout d'un primaire d'adhésion et/ou par un traitement de surface adéquat. En d'autres termes, un primaire d'adhésion et/ou un traitement de surface adéquat est appliqué sur tout ou partie de la surface du réservoir et/ou sur tout ou partie de la surface du réservoir revêtu par le matériau résistant au feu, par le matériau fusible ou par le matériau inerte et isolant au feu.

Par « primaire d'adhésion », on entend un revêtement qui permet d'améliorer le collage, l'accroche ou l'adhérence du matériau résistant au feu, du matériau fusible et/ou du produit intumescent. Différents primaires d'adhésion existent dans l'état de la technique. L'homme du métier saura choisir lequel utiliser en fonction de la nature de la surface du réservoir de stockage haute pression, en fonction de la nature du matériau résistant au feu et, notamment, en fonction de la résine élastomère thermodurcissable qui le constitue, en fonction du matériau fusible et/ou en fonction du produit intumescent. Il sera également choisir si nécessaire un traitement de surface adéquat. A titre d'exemples illustratifs et non limitatifs, on peut citer les primaires d'adhésion suivants : WACKER G790,G783,FD, DOW-CORNING 12000S,1205,P, GE SILICON SS4004, PRIMAIRE RHODIA RHODORSIL, PM820, Organosilanes, Organotitanates, Organophosphates....

D'autres caractéristiques et avantages de la présente invention apparaîtront encore à l'homme du métier à la lecture des exemples ci-dessous donnés à titre illustratif et non limitatif, et faisant référence aux figures annexées.

### BRÈVE DESCRIPTION DES DESSINS

La Figure 1 présente différentes façons de disposer à la surface du réservoir de stockage haute pression un coating fusible, non protecteur au feu (zone hachurée) permettant de faire fuir localement le réservoir pour minimiser sa pression maximale en début de fuite et minimiser toute explosion.
La Figure 2 est photographie d'un réservoir de stockage haute pression revêtu d'un matériau résistant au feu mis en œuvre dans l'invention.

### EXPOSÉ DÉTAILLÉ DE MODES DE RÉALISATION PARTICULIERS

### I. Matériel.

Le matériau mis en œuvre dans la présente invention a été préparé à partir de silicone formant la matrice résine élastomère thermodurcissable et d'ATH en tant que charge endothermique.

L'ATH largement utilisé dans de nombreuses applications pour des raisons de coût agit en se décomposant endothermiquement à des températures comprises entre 80 et 200°C, ce qui a pour conséquence d'abaisser la température du matériau et donc de diminuer sa vitesse de dégradation. De plus, sa décomposition libère de la vapeur d'eau qui dilue les mélanges inflammables et forme un écran à la pénétration de l'oxygène vers la surface du matériau.

L'ATH et le silicone utilisés dans le présent mode de réalisation sont respectivement l'ATH SH150 Rio Tinto Alcan et la résine Elastosil RT601 de chez Wacker Chemie AG.

### II. Procédé de préparation du matériau mis en œuvre dans l'invention.

La formulation consiste à réaliser les étapes suivantes :
- la résine est pesée, 360 g, puis placée dans un récipient sous un mélangeur ;
- les charges sont pesées, 600 g, puis incorporées petit à petit dans la résine à l'aide de l'hélice du mélangeur;

Cette étape est assez primordiale car il faut que la dispersion des charges soit la plus homogène possible. Plus le taux de charges est important, plus la dispersion est difficile.
- une fois le mélange résine - charges obtenu, un premier dégazage peut être nécessaire ;

En effet, lors de l'ajout des charges, l'hélice incorpore dans le mélange une quantité d'air qu'il faut éliminer du mélange pour la mise en œuvre ultérieure.
- une fois le mélange dégazé, il reste à peser la quantité adéquate de durcisseur, 40 g, et à mélanger de nouveau pour que le mélange soit homogène.
- un second dégazage peut alors permettre d'éliminer les bulles d'air incorporées lors du deuxième mélange.

Une fois cette dernière étape terminée, une formulation est obtenue, à savoir un produit fini qui nécessite d'être mis en forme par coulée.

### III. Mise en forme du matériau mis en œuvre dans l'invention.

La mise en œuvre sur réservoir consiste à couler la formulation obtenue au point II au fond d'un moule.

Le réservoir de stockage haute pression de forme bouteille est ensuite placé et poussé dans cette formulation, la matière se répartissant alors sur la moitié du réservoir. La matière est ensuite laissée pour polymériser à température ambiante ou en étuve pour avoir un réservoir protégé sur une demi-surface.

Il faut ensuite recommencer le procédé pour avoir une protection sur tout le réservoir. Les deux demi-protections sont alors tenues entre elles par collage naturel du silicone. Ainsi, un réservoir de stockage haute pression revêtu d'un matériau en silicone dans lequel est incorporé du ATH est obtenu (Figure 2).

### IV. Traitement additionnel du réservoir revêtu du matériau mis en œuvre dans l'invention.

De la peinture intumescente telle que la peinture Pacfire de Innovative Fire Systems peut être placée sur le réservoir de stockage haute pression revêtu du matériau selon la présente invention.

Cette peinture permet d'obtenir une barrière protectrice en créant une couche carbonée expansée, possédant donc un effet barrière thermique très marqué.

La mise en œuvre de la peinture se fait par simple application au pinceau en ayant pris soin d'utiliser au préalable le GE SILICON SS4004, un primaire favorisant l'adhésion. Ce primaire peut être également utile pour maximiser le collage entre le silicone et le composite du réservoir.

## Revendications

1. Procédé de préparation d'un matériau résistant au feu pour réservoir de stockage haute pression comprenant une matrice en résine élastomère thermodurcissable dans laquelle sont incorporées des charges endothermiques **caractérisé en ce qu'**il comprend les étapes suivantes consistant à :
a) préparer un mélange comprenant au moins un précurseur de la résine élastomère thermodurcissable et au moins une charge endothermique ladite étape (a) étant mise en œuvre à température ambiante ;
b) éventuellement dégazer le mélange obtenu à l'étape (a) ;
c) ajouter, au mélange obtenu à l'étape (a) ou au mélange dégazé obtenu à l'étape (b), un agent permettant d'obtenir à partir dudit précurseur ladite résine élastomère thermodurcissable, ladite étape (c) étant mise en œuvre à température ambiante ;
d) éventuellement dégazer le mélange obtenu à l'étape (c) ;
e) mettre en forme, à froid, le mélange obtenu à l'étape (c) ou le mélange dégazé obtenu à l'étape (d) par coulage, injection ou transfert assisté par le vide, dans un moule, sur ledit réservoir,
moyennant quoi un matériau résistant au feu comprenant une matrice en résine élastomère thermodurcissable dans laquelle sont incorporées des charges endothermiques est obtenu, ladite matrice en résine élastomère thermodurcissable étant une matrice en résine silicone.

2. Procédé selon la revendication 1, **caractérisé en ce que** lesdites charges endothermiques sont choisies parmi le trihydroxyde d'aluminium (ATH), le tétraborate disodique décahydraté (ou borax), le phosphate trisodique dodécahydraté, le dihydroxyde de magnésium (ou Brucite), la Colemanite, un monophosphate de mélamine, un pyrophosphate de mélamine, un polyphosphate de mélamine, le borate de zinc, l'hydromagnésite, un tripolyphosphate (TPP), le bis(diphenyl phosphate) de résorcinol (RDP), le bis(diphenyl phosphate) de bisphénol-A (BPADP) et leurs mélanges.

3. Procédé selon la revendication 1 ou 2, **caractérisé en ce que** la quantité desdites charges endothermiques exprimées en poids par rapport au poids total du matériau en résine élastomère thermodurcissable est compris entre 10% et 90%, notamment entre 15% et 80% et, en particulier, entre 40% et 70%.

4. Réservoir de stockage haute pression dont seule une partie de la surface externe est recouverte d'un matériau résistant au feu comprenant une matrice en résine élastomère thermodurcissable dans laquelle sont incorporées des charges endothermiques, ladite matrice en résine élastomère thermodurcissable étant une matrice en résine silicone susceptible d'être préparé selon un procédé tel que défini à la revendication 1,
ledit réservoir étant un réservoir de type IV et
la ou les zone(s) de la surface externe du réservoir non recouverte(s) par ledit matériau résistant au feu étant soit laissée(s) en l'état, soit revêtue(s) par un matériau fusible.

5. Réservoir de stockage haute pression selon la revendication 4, **caractérisé en ce que** tout ou partie de la surface externe dudit réservoir est en outre recouverte d'un produit intumescent.

6. Réservoir de stockage haute pression selon la revendication 5, **caractérisé en ce qu'**au moins une zone de produit intumescent est remplacée par un matériau fusible.

7. Réservoir de stockage haute pression selon la revendication 4, **caractérisé en ce que** tout ou partie de la surface externe dudit réservoir est en outre recouverte du matériau inerte au feu et isolant et notamment d'un tissu ou d'une chaussette en matériau inerte au feu et isolant, ledit matériau inerte pouvant éventuellement être recouvert par un produit intumescent.

8. Procédé pour protéger un réservoir de stockage haute pression comprenant les étapes consistant à appliquer, sur seule une partie de la surface dudit réservoir, un matériau résistant au feu comprenant une matrice en résine élastomère thermodurcissable dans laquelle sont incorporées des charges endothermiques, ladite matrice en résine élastomère thermodurcissable étant une matrice en résine silicone susceptible d'être préparé selon un procédé tel que défini à la revendication 1,
ledit réservoir étant un réservoir de type IV.

9. Procédé selon la revendication 8, **caractérisé en ce que** ledit procédé comprend en outre une étape additionnelle consistant à appliquer, sur tout ou partie de la surface du réservoir dont seule une partie est revêtue par le matériau résistant au feu, un produit intumescent.

10. Procédé selon la revendication 8 ou 9, **caractérisé en ce qu'**il comprend une étape additionnelle consistant à remplacer au moins une zone du matériau résistant au feu éventuellement revêtue de produit intumescent par un matériau fusible.

11. Procédé selon la revendication 8 ou 10, **caractérisé en ce que** ledit procédé comprend une étape additionnelle consistant à revêtir le réservoir dont seule une partie de la surface est revêtue d'un matériau résistant au feu et éventuellement d'un matériau fusible, par du matériau inerte au feu et isolant.

12. Procédé selon l'une quelconque des revendications 8 à 11, **caractérisé en ce qu'**un primaire d'adhésion et/ou un traitement de surface adéquat est appliqué sur tout ou partie de la surface du réservoir et/ou sur tout ou partie de la surface du réservoir revêtu par le matériau résistant au feu, par le matériau fusible ou par le matériau inerte et isolant au feu.

## Patentansprüche

1. Verfahren zum Herstellen eines feuerfesten Materials für Hochdruckspeicherbehälter, enthaltend eine Matrix aus wärmehärtendem Elastomerharz, in die endotherme Füllstoffe eingebracht sind, **dadurch gekennzeichnet, dass** es die folgenden Schritte umfasst:
a) Herstellen eines Gemischs, das zumindest einen Vorläufer des wärmehärtenden Elastomerharzes und zumindest einen endothermen Füllstoff enthält, wobei der Schritt (a) bei Raumtemperatur ausgeführt wird;
b) gegebenenfalls Entgasen des in Schritt (a) erhaltenen Gemischs;
c) Zugeben eines Mittels zu dem in Schritt (a) erhaltenen Gemisch bzw. zu dem in Schritt (b) erhaltenen entgasten Gemisch, welches Mittel ermöglicht, ausgehend dem Vorläufer das wärmehärtende Elastomerharz zu erhalten, wobei der Schritt (c) bei Raumtemperatur ausgeführt wird;
d) gegebenenfalls Entgasen des in Schritt (c) erhaltenen Gemischs;
e) Kaltformen des in Schritt (c) erhaltenen Gemisches bzw. des in Schritt (d) erhaltenen entgasten Gemisches durch Gießen, Spritzen oder vakuumgestütztes Überführen in einer Gießform an dem Speicherbehälter,
wodurch ein feuerfestes Material erhalten wird, das eine Matrix aus wärmehärtendem Elastomerharz enthält, in die endotherme Füllstoffe eingebracht sind, wobei die Matrix aus wärmehärtendem Elastomerharz eine Silikonharzmatrix ist.

2. Verfahren nach Anspruch 1, **dadurch gekennzeichnet, dass** die endothermen Füllstoffe ausgewählt sind aus Aluminiumtrihydroxid (ATH), Dinatriumtetraborat-Decahydrat (oder Borax), Trinatriumphosphat- Dodecahydrat, Magnesiumdihydroxid (oder Brucit), Colemanit, Melaminmonophosphat, Melaminpyrophosphat, Melaminpolyphosphat, Zinkborat, Hydromagnesit, Tripolyphosphat (TPP), Resorcinol- bis(diphenylphosphat) (RDP), Bisphenol-A-bis(diphenylphosphat) (BPADP) und deren Gemischen.

3. Verfahren nach Anspruch 1 oder 2, **dadurch gekennzeichnet, dass** die Menge an endothermen Füllstoffen, ausgedrückt als Gewicht bezogen auf das Gesamtgewicht des wärmehärtenden Elastomerharzmaterials, zwischen 10% und 90%, insbesondere zwischen 15 % und 80 %, insbesondere zwischen 40 % und 70 %, beträgt.

4. Hochdruckspeicherbehälter, von dem nur ein Teil der Außenfläche mit einem feuerfesten Material bedeckt ist, das eine Matrix aus wärmehärtendem Elastomerharz enthält, in die endotherme Füllstoffe eingebracht sind, wobei die Matrix aus wärmehärtendem Elastomerharz eine Matrix aus Silikonharz ist, das mit einem Verfahren nach Anspruch 1 hergestellt werden kann,
wobei der Speicherbehälter ein Speicherbehälter vom Typ IV ist und
der Bereich bzw. die Bereiche der Außenfläche des Speicherbehälters, der bzw. die nicht mit dem feuerfesten Material bedeckt ist/sind, entweder unverändert belassen oder mit einem schmelzbaren Material beschichtet sind.

5. Hochdruckspeicherbehälter nach Anspruch 4, **dadurch gekennzeichnet, dass** die gesamte Außenfläche des Speicherbehälters oder ein Teil davon ferner mit einem intumeszierenden Mittel bedeckt ist.

6. Hochdruckspeicherbehälter nach Anspruch 5, **dadurch gekennzeichnet, dass** zumindest ein Bereich des intumeszierenden Mittels durch ein schmelzbares Material ersetzt ist.

7. Hochdruckspeicherbehälter nach Anspruch 4, **dadurch gekennzeichnet, dass** die gesamte Außenfläche des Speicherbehälters oder ein Teil davon ferner mit einem feuerhemmenden und isolierenden Material und insbesondere mit einem Gewebe oder Mantel aus feuerhemmendem und isolierendem Material bedeckt ist, wobei das feuerhemmende Material gegebenenfalls mit einem intumeszierenden Mittel bedeckt ist.

8. Verfahren zum Schützen eines Hochdruckspeicherbehälters, umfassend die Schritte, die darin bestehen, nur auf einen Teil der Oberfläche des Speicherbehälters ein feuerfestes Material aufzutragen, das eine Matrix aus wärmehärtendem Elastomerharz enthält, in die endotherme Füllstoffe eingebracht sind, wobei die Matrix aus wärmehärtendem Elastomerharz eine Matrix aus Silikonharz ist, das mit einem Verfahren nach Anspruch 1 hergestellt werden kann,
wobei der Speicherbehälter ein Speicherbehälter vom Typ IV ist.

9. Verfahren nach Anspruch 8, **dadurch gekennzeichnet, dass** das Verfahren ferner einen zusätzlichen Schritt umfasst, der darin besteht, ein intumeszierendes Mittel auf die gesamte Oberfläche des Speicherbehälters oder einen Teil davon aufzutragen, von der nur ein Teil mit dem feuerfesten Material überzogen ist.

10. Verfahren nach Anspruch 8 oder 9, **dadurch gekennzeichnet, dass** es einen zusätzlichen Schritt umfasst, der darin besteht, zumindest einen Bereich des feuerfesten Materials, der gegebenenfalls mit einem intumeszierenden Mittel überzogen ist, durch ein schmelzbares Material zu ersetzen.

11. Verfahren nach Anspruch 8 oder 10, **dadurch gekennzeichnet, dass** das Verfahren einen zusätzlichen Schritt umfasst, der darin besteht, den Speicherbehälter, von dem nur ein Teil der Oberfläche mit einem feuerfesten Material und gegebenenfalls mit einem schmelzbaren Material überzogen ist, mit einem feuerhemmenden und isolierenden Material zu überziehen.

12. Verfahren nach einem der Ansprüche 8 bis 11, **dadurch gekennzeichnet, dass** ein Haftgrund und/oder eine adäquate Oberflächenbehandlung auf die gesamte Oberfläche des Speicherbehälters oder einen Teil davon und/oder auf die gesamte Oberfläche des Speicherbehälters, der mit dem feuerfesten Material, dem schmelzbaren Material oder dem feuerhemmenden und isolierenden Material überzogen ist, aufgetragen wird.

## Claims

1. A process for preparing a fire-proof material for high pressure storage tank comprising a matrix of thermosetting elastomeric resin wherein endothermic fillers are incorporated, **characterised in that** it comprises the following steps of:
a) preparing a mixture comprising at least one precursor of the thermosetting elastomeric resin and at least one endothermic filler, said step (a) being performed at room temperature ;
b) optionally outgassing the mixture obtained in step (a);
c) adding, to the mixture obtained in step (a) or to the outgassed mixture obtained in step (b), an agent enabling said thermosetting elastomeric resin to be obtained from said precursor, said step (c) being performed at room temperature ;
d) optionally outgassing the mixture obtained in step (c) ;
e) cold shaping the mixture obtained in step (c) or the outgassed mixture obtained in step (d) by casting, injection or vacuum assisted transfer into a mold on said tank,
whereby a fire-proof material comprising a matrix of thermosetting elastomeric resin wherein endothermic fillers are incorporated is obtained, said matrix of thermosetting elastomeric resin being a matrix of silicone resin.

2. The process according to claim 1, **characterised in that** said endothermic fillers are selected from aluminium trihydroxide (ATH), disodium tetraborate decahydrate (or borax), trisodium phosphate dodecahydrate, magnesium dihydroxide (or Brucite), Colemanite, a melamine monophosphate, a melamine pyrophosphate, a melamine polyphosphate, zinc borate, hydromagnesite, a tripolyphosphate (TPP), resorcinol bis(diphenyl phosphate) (RDP), bisphenol-A bis(diphenyl phosphate) (BPADP) and mixtures thereof.

3. The process according to claim 1 or 2, **characterised in that** the amount of said endothermic fillers expressed in weight with respect to the total weight of the material of thermosetting elastomeric resin is between 10% and 90%, notably between 15% and 80% and, in particular, between 40% and 70%.

4. A high pressure storage tank only a part of the external surface of which is covered with a fire-proof material comprising a matrix of thermosetting elastomeric resin wherein endothermic fillers are incorporated, said matrix of thermosetting elastomeric resin being a matrix of silicone resin, likely to be prepared according to a process as defined in claim 1,
said tank being a type IV tank and
the zone(s) of the external surface of the tank non-covered by the fire-proof material being either left as such, or coated with a meltable material.

5. The high pressure storage tank according to claim 4, **characterised in that** all or part of the external surface of said tank is further covered with an intumescent substance.

6. The high pressure storage tank according to claim 5, **characterised in that** at least one zone of the intumescent substance is replaced by a meltable material.

7. The high pressure storage tank according to claim 4, **characterised in that** all or part of the external surface of said tank is further covered with a fire inert insulating material and in particular a fabric or sock of fire inert insulating material, wherein said inert material can optionally be covered with an intumescent substance.

8. A process for protecting a high pressure storage tank comprising the steps of applying, on only a part of the surface of said tank, a fire-proof material comprising a matrix of thermosetting elastomeric resin wherein endothermicfillers are incorporated, said matrix of thermosetting elastomeric resin being a matrix of silicone resin, likely to be prepared according to a process as defined in claim 1,
said tank being a type IV tank.

9. The process according to claim 8, **characterised in that** said process further comprises an additional step of applying an intumescent substance on all or part of the surface of the tank only a part of which is covered by the fire-proof material.

10. The process according to claim 8 or 9, **characterised in that** it comprises an additional step of replacing at least one zone of the fire-proof material optionally covered with the intumescent substance by a meltable material.

11. The process according to claim 8 or 10, **characterised in that** said process comprises an additional step of coating the tank only a part of the surface of which is covered with a fire-proof material and optionally a meltable material, with a fire inert insulating material.

12. The process according to any of claims 8 to 11, **characterised in that** an adequate adhesion primary coat and/or surface treatment is applied on all or part of the surface of the tank and/or on all or part of the surface of the tank covered with the fire-proof material, the meltable material or the fire inert insulating material.
